# EUROPÄISCHE PATENTSCHRIFT

(11) **EP 1 435 121 B1**
(45) Veröffentlichungstag und Bekanntmachung des Hinweises auf die Patenterteilung: **04.05.2005**
(21) Anmeldenummer: 02777117.9
(22) Anmeldetag: 16.09.2002
(51) Int. Cl.: H01M 8/04

(54) **BEFEUCHTUNGSZELLE**
HUMIDIFICATION CELL
CELLULE D'HUMIDIFICATION

(30) Priorität: 27.09.2001 EP 01123170
(43) Veröffentlichungstag der Anmeldung: 07.07.2004
(73) Patentinhaber: SIEMENS AKTIENGESELLSCHAFT, 80333 München (DE)
(72) Erfinder: HARTNACK, Herbert, 91056 Erlangen (DE); LERSCH, Josef, 91336 Heroldsbach (DE); MATTEJAT, Arno, 91088 Bubenreuth (DE)
(86) Internationale Anmeldenummer: PCT/EP2002/010372
(87) Internationale Veröffentlichungsnummer: WO 2003/030288

(56) Entgegenhaltungen:
- EP-A- 1 098 381
- WO-A-01/11216
- PATENT ABSTRACTS OF JAPAN vol. 2000, no. 16, 8. Mai 2001 (2001-05-08) -& JP 2001 023662 A (FUJI ELECTRIC CO LTD), 26. Januar 2001 (2001-01-26)
- PATENT ABSTRACTS OF JAPAN vol. 1996, no. 09, 30. September 1996 (1996-09-30) -& JP 08 138704 A (TOYOTA MOTOR CORP), 31. Mai 1996 (1996-05-31)
- PATENT ABSTRACTS OF JAPAN vol. 1995, no. 08, 29. September 1995 (1995-09-29) -& JP 07 135012 A (TOYOTA MOTOR CORP), 23. Mai 1995 (1995-05-23)
- PATENT ABSTRACTS OF JAPAN vol. 1998, no. 11, 30. September 1998 (1998-09-30) -& JP 10 172591 A (HONDA MOTOR CO LTD), 26. Juni 1998 (1998-06-26)

## Beschreibung

Die Erfindung bezieht sich auf eine Befeuchtungszelle einer Brennstoffzelleneinrichtung mit zwei Außenplatten, zwischen denen ein Gasraum, ein Befeuchtungswasserraum und eine die beiden Räume trennende wasserdurchlässige Membran angeordnet ist.

In einer Brennstoffzelle wird durch die elektrochemische Verbindung von Wasserstoff (H₂) und Sauerstoff (O₂) an einem Elektrolyten zu Wasser (H₂O) elektrischer Strom mit hohem Wirkungsgrad erzeugt und dies auch ohne Emission von Schadstoffen und Kohlendioxid (CO₂), wenn als Brenngas reiner Wasserstoff eingesetzt wird. Die technische Umsetzung dieses Prinzips der Brennstoffzelle hat zu unterschiedlichen Lösungen, und zwar mit verschiedenen Elektrolyten und Betriebstemperaturen zwischen 60°C und 1000°C geführt. In Abhängigkeit von ihrer Betriebstemperatur werden die Brennstoffzellen in Nieder-, Mittel- und Hochtemperatur-Brennstoffzellen eingeteilt, die sich wiederum durch verschiedene technische Ausführungsformen voneinander unterscheiden.

Eine einzelne Brennstoffzelle liefert eine Betriebsspannung von maximal etwa 1,1 V. Daher wird eine Vielzahl von Brennstoffzellen zu einer Brennstoffzellenanordnung zusammengeschlossen, beispielsweise zu einem Stapel planarer Brennstoffzellen der Bestandteil eines Brennstoffzellenblocks ist. Durch das In-Reihe-Schalten der Brennstoffzellen der Anordnung kann die Betriebsspannung der Anordnung 100 V und mehr betragen.

Eine planare Brennstoffzelle umfasst einen flachen Elektrolyten, an dessen eine flache Seite eine flache Anode und an dessen andere flache Seite eine ebenfalls flache Kathode grenzt. Diese beiden Elektroden bilden zusammen mit dem Elektrolyten eine sogenannte Elektrolyt-Elektroden-Einheit, die im Folgenden der Einfachheit halber auch Elektrolyt-Anordnung genannt wird. Angrenzend an die Anode ist ein Anodengasraum und angrenzend an die Kathode ein Kathodengasraum angeordnet. Zwischen dem Anodengasraum einer Brennstoffzelle und dem Kathodengasraum einer dieser Brennstoffzelle benachbarten Brennstoffzelle ist eine Verbundleiterplatte angeordnet. Die Verbundleiterplatte stellt eine elektrische Verbindung zwischen der Anode der erstgenannten Brennstoffzelle und der Kathode der zweitgenannten Brennstoffzelle her. In Abhängigkeit von der Art der Brennstoffzelle ist die Verbundleiterplatte beispielsweise als eine einzelne metallische Platte oder als ein Kühlelement ausgestaltet, das zwei aufeinander gestapelte Platten mit einem dazwischenliegenden Kühlwasserraum umfasst. Je nach Ausführungsform der Brennstoffzellen befinden sich in einem Brennstoffzellenstapel weitere Bauelemente, wie beispielsweise elektrisch leitende Schichten, Dichtungen oder Druckkissen.

Die Brennstoffzellen einer Brennstoffzellenanordnung werden während ihres Betriebs mit Betriebsgasen - also einem wasserstoffhaltigen Brenngas und einem sauerstoffhaltigen Oxidationsgas - versorgt. Manche Ausführungsformen von Niedertemperatur-Brennstoffzellen, insbesondere Brennstoffzellen mit einer Polymer-Elektrolyt-Membran (PEM-Brennstoffzellen), benötigen zum Betrieb befeuchtete Betriebsgase. Diese Betriebsgase werden in einer geeigneten Einrichtung, wie beispielsweise einem Flüssigkeitsringverdichter oder einem Membranbefeuchter, mit Wasserdampf gesättigt. Die Befeuchtungseinrichtung und eventuelle weitere Versorgungseinrichtungen bilden zusammen mit der Brennstoffzellenanordnung die Brennstoffzelleneinrichtung.

Werden die Betriebsgase durch lange Betriebsgaszuleitungen vom Befeuchter zur Brennstoffzellenanordnung geleitet, so kann auf diesem Weg die Temperatur eines befeuchteten Betriebsgases durch Verlust von Wärme an die Umgebung sinken.

Dies führt zur Kondensation von Befeuchtungswasser. Die Betriebsgase werden anschließend in den Brennstoffzellen wieder aufgeheizt, wodurch sich ihre relative Feuchtigkeit verringert. Hierdurch wird der stets feucht zu haltende und extrem trockenheitsempfindliche Elektrolyt geschädigt, dessen Lebensdauer sich somit verringert. Es ist daher wünschenswert, dass der Befeuchter möglichst nahe an den Brennstoffzellen angeordnet ist.

Aus den Patentschriften US 5,200,278 und US 5,382,478 ist ein Brennstoffzellenblock mit einem Stapel aus planaren Brennstoffzellen und einem Stapel aus planaren Befeuchtungszellen bekannt. Beide Stapel sind unmittelbar benachbart im Brennstoffzellenblock angeordnet. Die Befeuchtungszellen sind als Membranbefeuchter mit einem Betriebsgasraum, einem Befeuchtungswasserraum und einer zwischen den beiden Räumen angeordneten wasserdurchlässigen Membran ausgeführt. Bevor die Betriebsgase den Brennstoffzellen des Brennstoffzellenstapels zugeleitet werden, durchströmen sie die Befeuchtungszellen, werden dort befeuchtet und strömen anschließend ohne den Brennstoffzellenblock wieder zu verlassen in den Brennstoffzellenstapel. In den Befeuchtungszellen liegt die wasserdurchlässige Membran direkt an den beidseitig der Membran angeordneten Außenplatten der Befeuchtungszellen an. Auf der einen Seite der Membran strömt das Befeuchtungswasser und auf der anderen Seite der Membran das Betriebsgas durch Kanäle, die in die jeweilige Außenplatte eingearbeitet sind. Entlang der Stege der Außenplatten jedoch wird die Membran durch die Stege abgedeckt, so dass kein Befeuchtungswasser bzw. Betriebsgas zur Membran gelangen kann. Hierdurch wird die Befeuchtungsleistung der Membran gegenüber vom Befeuchtungswasser frei zugänglichen Membran verringert. Bei der Verwendung von großflächigen Strukturen in der Außenplatte liegt die Membran großflächig an der Außenplatte an, wodurch die Befeuchtungsleistung in erheblichem Umfang vermindert ist.

Es ist die Aufgabe der vorliegenden Erfindung, eine Befeuchtungszelle einer Brennstoffzelleneinrichtung anzugeben, die eine hohe Befeuchtungsleistung aufweist.

Diese Aufgabe wird durch eine Befeuchtungszelle der eingangs genannten Art gelöst, die erfindungsgemäß ein zwischen der Membran und einer der Außenplatten angeordnetes wasserdurchlässiges Stützelement aufweist.

Unter einer Brennstoffzelleneinrichtung wird eine Brennstoffzellenanordnung in Verbindung mit einer Befeuchtungseinrichtung und gegebenenfalls weiteren Versorgungseinrichtungen verstanden. Die Brennstoffzellenanordnung umfasst hierbei eine Vielzahl von zu einem oder mehreren Stapeln aufeinander gestapelten planaren Brennstoffzellen. Die Brennstoffzelleneinrichtung kann beispielsweise ein Brennstoffzellenblock mit einem oder mehreren Befeuchtungszellenstapeln und einem oder mehreren Brennstoffzellenstapeln sein. Die Befeuchtungszellen können jedoch auch eine gewisse Strecke von den Brennstoffzellen entfernt angeordnet sein. Ebenfalls möglich ist ein Stapel aus gemischt angeordneten Brennstoffzellen und Befeuchtungszellen.

Die Beeinträchtigung der Befeuchtungsleistung der wasserdurchlässigen Membran durch das teilweise anliegen der Membran an einer der Außenplatten kann eliminiert werden, indem die Membran frei hängend zwischen den Außenplatten angeordnet wird. In Abhängigkeit von dem Material, aus dem die Membran gefertigt ist, ist die Membran jedoch so weich und biegsam, dass sie sich im Betrieb immer wieder zumindest teilweise an eine der Außenplatten anschmiegt. Mit einem wasserdurchlässigen Stützelement, das zwischen der Membran und einer der Außenplatten angeordnet ist, wird die Membran im Bereich des Stützelements von der Außenplatte beabstandet gehalten. Je nachdem, auf welcher Seite der Membran das Stützelement angeordnet ist, durchdringt das Befeuchtungswasser entweder zuerst das Stützelement und dann die Membran oder zuerst die Membran und dann das Stützelement und gelangt so zum zu befeuchtenden Betriebsgas.

Das Stützelement kann beispielsweise mit der Membran fest verbunden sein. Hierdurch wird die Membran durch das mit einer genügenden Steifigkeit versehene Stützelement in der gewünschten Position zwischen dem Gasraum und dem Befeuchtungswasserraum gehalten, so dass die Membran an keiner der Außenplatten anliegt. In einer alternativen Ausgestaltung der Erfindung liegt die Membran locker und lösbar an dem Stützelement an und wird beispielsweise durch den Betriebsgasdruck oder den Befeuchtungswasserdruck gegen das Stützelement gedrückt. Auch auf diese Weise wird die Membran in einer vorbestimmten Position gehalten.

Zweckmäßigerweise füllt das Stützelement nicht den gesamten Gasraum bzw. Befeuchtungswasserraum aus, sondern lässt noch einen Teil des Raumes frei, damit der Strom des Betriebsgases oder des Befeuchtungswassers durch den Gasraum bzw. den Befeuchtungswasserraum nicht in einem den Betrieb der Befeuchtungszelle beeinträchtigendem Umfang durch das Stützelement gestört wird.

Besonders zuverlässig wird die Membran in einer gewünschten Position gehalten, wenn beidseitig der Membran jeweils ein Stützelement angeordnet ist. Unabhängig davon, ob die Membran fest mit einer oder beiden Stützelementen verbunden ist oder lösbar zwischen den Stützelementen eingeklemmt ist, ist im Bereich der Stützelemente eine teilweise Abdeckung der Membran durch die Außenplatten nicht möglich. Hierdurch ist eine zuverlässig hohe Befeuchtungsleistung der Membran gewährleistet.

Eine besonders stabile Lagerung der Membran und ein besonders einfacher Aufbau der Befeuchtungszelle wird dadurch erreicht; dass die erste Außenplatte, das erste Stützelement, die Membran, das zweite Stützelement und die zweite Außenplatte jeweils aneinander anliegen. Hierbei weisen die Außenplatten zweckmäßigerweise Kanäle oder Prägungen auf, durch die das Betriebsgas oder das Befeuchtungswasser entlang der Außenplatte und entlang des an der Außenplatte anliegenden Stützelements strömen kann. Bei dieser Ausgestaltung bildet die Befeuchtungszelle einen besonders stabilen und weitgehend gegen Druck unempfindlichen Verbund. Diese Ausgestaltung der Erfindung ist besonders geeignet bei sehr flachen Befeuchtungszellen mit einem sehr flachen Gasraum und/oder Befeuchtungswasserraum.

Das Stützelement kann beispielsweise als ein Drahtgewebe, ein Drahtgeflecht oder auch als ein Streckgitter ausgestaltet sein. Hierbei ist jedoch darauf zu achten, dass ein metallisches Stützelement keine scharfen Kanten aufweist, die die in der Regel weiche Membran beschädigen. Für die Membran mechanisch ungefährlich und besonders preiswert herzustellen ist ein Stützelement, das aus einem Fasergeflecht oder einem Faserfilz gefertigt ist. Als Fasern eignen sich beispielsweise Kunststofffasern, Zellulosefasern oder andere Fasern, die chemisch ausreichend stabil gegenüber den Betriebsgasen sind.

Als besonders vorteilhaft hat sich die Verwendung von Kohlepapier zur Herstellung des Stützelements erwiesen. Kohlepapier weist eine genügende Stabilität auch gegen reinen Sauerstoff und reinen Wasserstoff in Verbindung mit Wasser auf und ist außerdem genügend wasserdurchlässig, um einen effektiven Betrieb der Befeuchtungszelle zu gewährleisten.

Eine besonders hohe Befeuchtungsleistung der Befeuchtungszelle wird erreicht, wenn das Stützelement hydrophil ist. Ein hydrophiles Stützelement saugt das Wasser an und leitet es besonders effektiv zu dem Ort, wo das Wasser verdampft. Bei der Verwendung von Kohlepapier als Stützelement kann die Hydrophilität des Kohlepapiers, beispielsweise durch eine chemische Behandlung, gesteigert werden.

Das Stützelement kann die dem Befeuchtungswasser oder dem Betriebsgas zugängliche Fläche der Membran vollständig bedecken. Eine gute Stütze der Membran ist jedoch auch gewährleistet, wenn das Stützelement, beispielsweise durch Aussparungen im Stützelement, nur einen Teil der flachen Seite der Membran bedeckt. Hierdurch erfolgt ein ungehinderterer Zugang vom Befeuchtungswasser und Betriebsgas zur Membran, wodurch die Befeuchtungsleistung der Befeuchtungszelle erhöht wird. Es ist jedoch darauf zu achten, dass das Stützelement mindestens die Hälfte einer flachen Seite der Membran bedeckt, da bei Unterschreitung dieser Fläche eine ausreichende Stützung der in der Regel sehr flexiblen Membran nicht mehr gewährleistet ist.

In bevorzugter Ausgestaltung der Erfindung weist die Befeuchtungszelle eine Abdeckvorrichtung auf, die das Stützelement im Bereich eines Betriebsmitteleinlasses abdeckt. Der Betriebsmitteleinlass ist die Öffnung einer Leitung oder eines Kanals in den Gas- oder Befeuchtungswasserraum der Befeuchtungszelle, durch die während des Betriebs der Befeuchtungszelle Betriebsgas und Befeuchtungswasser - im folgenden Betriebsmittel genannt - in den Gasraum bzw. den Befeuchtungswasserraum strömt. Die Betriebsmittel strömen also durch einen Betriebsmitteleinlass in den jeweiligen Raum der Befeuchtungszelle. Es hat sich gezeigt, dass je nach Ausgestaltung des Betriebsmittelraums der Betriebsmittelstrom aus dem Betriebsmitteleinlass in den Betriebsgas- bzw. Befeuchtungswasserraum durch das Stützelement gestört wird. Das Betriebsmittel strömt mit relativ hoher Geschwindigkeit aus dem Betriebsmitteleinlass in den jeweiligen Raum und trifft dort auf das Stützelement oder strömt mit der relativ hohen Geschwindigkeit an dem Stützelement entlang. Hierdurch entstehen im Betriebsmittel Turbulenzen, was zu einer Verlangsamung des Betriebsmittelstroms und zu einer Erhöhung des Strömungswiderstands des Betriebsmittels durch die Befeuchtungszelle führt. Die durch solche Turbulenzen hervorgerufene Erhöhung des Strömungswiderstands kann durch eine Abdeckvorrichtung, die das Stützelement im Bereich eines Betriebsmitteleinlasses abdeckt, weitgehend vermieden werden. Als Abdeckvorrichtung kann beispielsweise eine Folie, eine Metallbeschichtung, ein Kunststoffstück oder ein kleines Metallblech Verwendung finden, mit dem das Stützelement um einen Betriebsmitteleinlass herum vom Betriebsmittelstrom getrennt wird. Die Abdeckvorrichtung lenkt das Betriebsmittel aus dem Betriebsmitteleinlass in den jeweiligen Raum und sorgt dafür, dass das Betriebsmittel ohne Ausbildung von signifikanten Turbulenzen in den Raum einströmt.

In vorteilhafter Ausgestaltung der Erfindung ist die Membran aus dem gleichen Material hergestellt wie der Elektrolyt aus der Elektrolyt-Anordnung der Brennstoffzellen aus der Brennstoffzelleneinrichtung. Als ein solches Material eignet sich besonders ein Polymer mit der Bezeichnung NAFION von der Firma DuPont aus Wilmington, Delaware. Durch diese Ausgestaltung vereinfacht sich die Herstellung der Befeuchtungszelle, weil auf ein Material zurückgegriffen werden kann, das bereits in der Brennstoffzelleneinrichtung Verwendung gefunden hat.

Eine weitere Vereinfachung bei der Herstellung der Befeuchtungszelle kann erreicht werden, in dem die Struktur der Elektroden durch ein Trägermaterial bestimmt ist, wobei das Stützelement aus dem gleichen Trägermaterial gefertigt ist. An die Elektroden in der Brennstoffzelle sind ganz ähnliche Anforderungen gestellt wie an das Stützelement in der Befeuchtungszelle: Elektroden wie Stützelement müssen eine ausreichende chemische Stabilität gegen das Gemisch aus Betriebsgasen und Wasser aufweisen und sie müssen durchlässig für Wasser und Betriebsgase sein. Daher können die Elektroden und das Stützelement aus dem gleichen Trägermaterial gefertigt werden. Die spezifischen Eigenschaften der Elektroden oder des Stützelements werden durch eine Weiterbehandlung dieses Trägermaterials erreicht. So wird beispielsweise das Fasergeflecht oder der Faserfilz für das Stützelement durch eine chemische Behandlung hydrophil gemacht. Trotz eventuell etwas unterschiedlicher Herstellungsverfahren der Elektroden und des Stützelements wird durch die Verwendung des gleichen Trägermaterials für die Herstellung der Elektroden und des Stützelements die Herstellung der Brennstoffzelleneinrichtung vereinfacht und auch verbilligt.

Ein weiterer Vorteil der Erfindung wird erreicht, indem die Befeuchtungszellen eine Membran-Anordnung aus einer Membran und beidseitig der Membran angeordnete Stützelemente aufweisen, wobei die Membran-Anordnung und die Elektrolyt-Anordnung in Aufbau und Abmessungen gleich sind. Die Befeuchtungszelle weist hierbei einen analogen Aufbau auf wie eine Brennstoffzelle der Brennstoffzelleneinrichtung: Anstelle des Elektrolyten der Brennstoffzelle weist die Befeuchtungszelle eine Membran auf, die zweckmäßigerweise aus dem gleichen Material wie der Elektrolyt ist. Analog wie die Anordnung der Elektroden an den beiden flachen Seiten des Elektrolyten sind in der Befeuchtungszelle die Stützelemente an den beiden flachen Seiten der Membran angeordnet. Hierbei müssen die Stützelemente jedoch nicht fest mit der Membran verbunden sein, sondern können lose an der Membran anliegen. Zweckmäßigerweise weisen hierbei die Stützelemente das gleiche Trägermaterial auf wie die Elektroden.

Ein weiterer Vorteil wird durch den gleichen Aufbau von Befeuchtungszelle und Brennstoffzelle in einer Brennstoffzelleneinrichtung erreicht. Hierdurch vereinfacht sich die Fertigung dieser Brennstoffzelleneinrichtung und ist leichter standardisierbar. Bei einer Brennstoffzelle sind beidseitig der Elektrolyt-Anordnung der Oxidationsgasraum und der Brenngasraum angeordnet. In analoger Weise ist in der Befeuchtungszelle beidseitig der Membran-Anordnung der Gasraum und der Befeuchtungswasserraum angeordnet. In analoger Weise wie die Brennstoffzelle beidseitig ihrer flachen Seite durch eine Verbundleiterplatte begrenzt wird, wird die Befeuchtungszelle beidseitig ihrer flachen Seiten durch Außenplatten begrenzt. Zweckmäßigerweise sind die Außenplatten hierbei aus dem gleichen Material und in der gleichen Form gehalten wie die Verbundleiterplatten der Brennstoffzelle. Bei der Verwendung gleicher Abmessungen für die Elemente der Membran-Anordnung und die Elemente der Elektrolyt-Anordnung können bei der Herstellung der Anordnungen die gleichen Werkzeuge und Schablonen Verwendung finden. Auch dies vereinfacht die Fertigung der Brennstoffzelleneinrichtung erheblich.

Eine weitere Vereinfachung der Fertigung der Brennstoffzelleneinrichtung wird erreicht, indem die Elektrolyt-Anordnung und die Membran-Anordnung von dem gleichen Dichtmaterial eingefasst sind. Das Dichtmaterial hält die Anordnungen in Position und sorgt für einen gasdichten Verschluss der Gasräume sowie des Befeuchtungswasserraums gegenüber der Umgebung der Brennstoffzelleneinrichtung.

Eine Vereinfachung der Planung, Gestaltung, Herstellung und Montage der Brennstoffzelleneinrichtung lässt sich dadurch erreichen, dass die äußere Form und die äußere Abmessungen der Befeuchtungszellen gleich sind wie diejenigen der Brennstoffzellen. Die Herstellung von Brennstoffzellen und Befeuchtungszellen ist somit standardisierbar. Außerdem vereinfacht sich der Aufbau der Brennstoffzelleneinrichtung hierdurch, da die die Zellen umgebenden Bauelemente der Einrichtung, wie beispielsweise Zuganker, Verrohrungen oder eine Hülle um die Brennstoffzelleneinrichtung, nicht an verschiedene Größen von Befeuchtungszellen und Brennstoffzellen anzupassen sind.

Ausführungsbeispiele der Erfindung werden anhand von fünf Figuren näher erläutert. Dabei zeigen:
- FIG 1: eine Draufsicht auf eine aufgeschnitten dargestellte Befeuchtungszelle;
- FIG 2: einen Schnitt durch die Befeuchtungszelle aus FIG 1;
- FIG 3: einen weiteren Schnitt durch die Befeuchtungszelle;
- FIG 4: eine Brennstoffzelleneinrichtung;
- FIG 5: einen Schnitt durch eine Brennstoffzelle.

Gleich Gegenstände sind in den Figuren mit gleichen Bezugszeichen versehen.

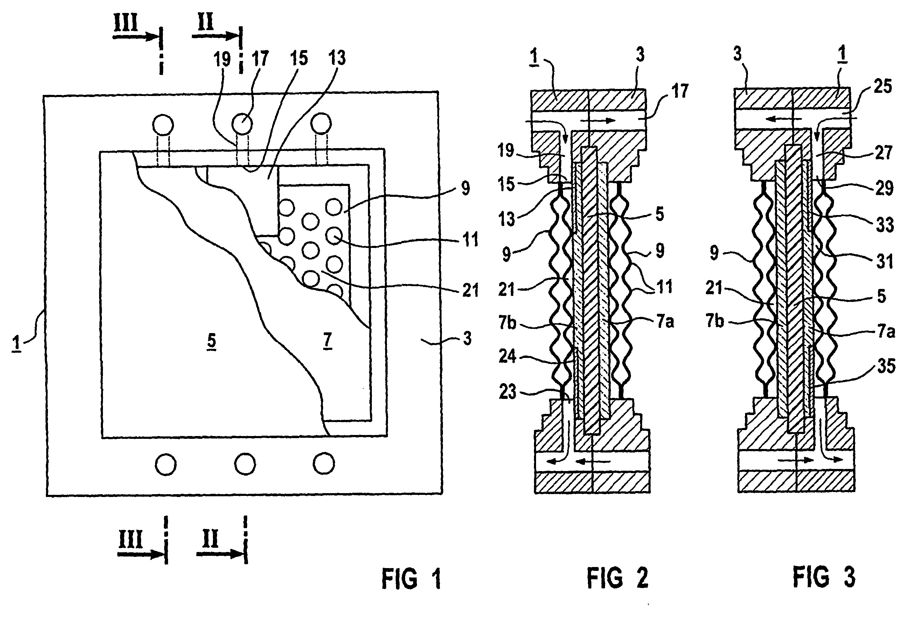

In Figur 1 ist in einer schematischen Draufsicht eine rechteckige und planare Befeuchtungszelle 1 dargestellt, die eine in einem Rahmen aus einem Dichtmaterial 3 eingebettete und aufgeschnitten dargestellte Membran 5 umfasst. Unter der Membran 5 ist in ebenfalls aufgeschnittener Darstellung ein Stützelement 7 sichtbar. Unterhalb des Stützelements 7 ist eine Außenplatte 9 dargestellt, die als ein Blech mit einer Prägestruktur 11 ausgestaltet ist. Die Prägestruktur 11 besteht aus runden Erhöhungen bzw. Vertiefungen innerhalb der Außenplatte 9. Zwischen der Außenplatte 9 und dem Stützelement 7 ist eine Abdeckvorrichtung 13 angebracht. Die Abdeckvorrichtung 13 ist im Bereich eines Betriebsmitteleinlasses 15 angeordnet.

Figur 2 zeigt einen Schnitt durch die Befeuchtungszelle 1 entlang der Linie A-A. Die Befeuchtungszelle 1 ist Teil eines Befeuchtungszellenstapels einer Brennstoffzelleneinrichtung. Während des Betriebs der Befeuchtungszelle 1 strömt Brenngas durch den Axialkanal 17 der Befeuchtungszelle 1. Der Axialkanal 17 ist parallel zur Stapelrichtung des Befeuchtungszellenstapels ausgerichtet. Vom Axialkanal 17 zweigt jeweils ein Radialkanal 19 zu einem der von Befeuchtungszellen 1 des Befeuchtungszellenstapels ab. Das Brenngas strömt durch den Radialkanal 19 und im weiteren Verlauf durch den Betriebsmitteleinlass 15 und gelangt anschließend in den Gasraum 21 der Befeuchtungszelle 1. Nach Austritt aus dem Betriebsmitteleinlass 15 streicht das Brenngas ohne signifikante Turbulenzen zu bilden einerseits an der Abdeckvorrichtung 13 und andererseits an der Außenplatte 9 der Befeuchtungszelle 1 entlang.

Die Außenplatte 9 ist als ein Heizelement ausgestaltet, das aus zwei Metallblechen zusammengesetzt ist. Zwischen den Metallblechen befindet sich ein Heizwasserraum, durch den während des Betriebs der Befeuchtungszelle 1 warmes Heizwasser strömt. Dieses Heizwasser heizt sowohl das durch die Befeuchtungszelle 1 strömende Brenngas wie auch das Befeuchtungswasser auf annähernd die Temperatur der Brennstoffzellen der Brennstoffzelleneinrichtung.

Im Gasraum 21 wird das Brenngas mit Befeuchtungswasser befeuchtet und gelangt nach Durchströmen des Gasraums 21 zum Betriebsmittelauslass 23 des Gasraums 21. Durch einen weiteren Radialkanal und einen weiteren Axialkanal strömend verlässt es im befeuchteten Zustand die Befeuchtungszelle 1 wieder. Auch im Bereich des Betriebsmittelauslasses 23 ist das Stützelement 7b durch eine weitere Abdeckvorrichtung 24 abgedeckt, um Turbulenzen beim Einströmen des Brenngases in den Betriebsmittelauslass 23 zu verhindern.

Figur 3 zeigt einen Schnitt durch die Befeuchtungszelle 1 entlang der in Figur 1 dargestellten Linie B-B. Dieser Schnitt ist entlang eines Axialkanals 25 geführt, der während des Betriebs der Befeuchtungszelle 1 Befeuchtungswasser führt. Das Befeuchtungswasser strömt durch den Axialkanal 25 und gelangt durch den Radialkanal 27 zu einem weiteren Betriebsmitteleinlass 29. Diesen Betriebsmitteleinlass 29 durchströmend gelangt das Befeuchtungswasser in den Befeuchtungswasserraum 31, und strömt zwischen die Außenplatte 9 und eine Abdeckvorrichtung 33. Anschließend gelangt das Befeuchtungswasser zum Stützelement 7a, das ein durch einen chemischen Prozess hydrophil gemachtes Kohlepapier ist. Ein Teil des Befeuchtungswassers durchdringt das hydrophile Kohlepapier, und gelangt zur Membran 5. Nach Durchtreten dieser wasserdurchlässige Membran 5 durchdringt das Befeuchtungswasser auch das an der anderen Seite der Membran 5 angeordnete weitere Stützelement 7b. An der dem Gasraum 21 zugewandten Seite des Stützelements 7b verdampft das Befeuchtungswasser und befeuchtet somit das durch den Gasraum 21 strömende Brenngas. Ein weiterer Teil des Befeuchtungswassers durchströmt den Befeuchtungswasserraum 31 ungenutzt, streicht entlang einer weiteren Abdeckvorrichtung 35 und verlässt die Befeuchtungszelle 1 nach Durchströmen durch einen Radialkanal und einen weiteren Axialkanal wieder.

Die beiden Stützelemente 7a und 7b liegen lösbar an der wasserdurchlässigen Membran 5 an und bedecken die flachen Außenseiten der Membran 5 bis auf eine schmale Außenkante vollständig. Die beiden Stützelemente 7a und 7b bilden zusammen mit der Membran 5 eine Membran-Anordnung, die zwischen den beiden Außenplatten 9 der Befeuchtungszelle 1 eingeklemmt ist. Die Stützelemente 7a, 7b liegen somit auf der einen Seite an der Membran 5 an und auf der anderen Seite an einer der Außenplatten 9 an. Durch die Stützelemente 7a, 7b wird die Membran 5 fest in ihrer Position gehalten. Außerdem bewirken die Stützelemente 7a, 7b dass die Membran 5 an keiner Stelle die Außenplatte 9 berühren kann und somit von einem Teil der Außenplatten 9 abgedeckt wird. Das Befeuchtungswasser und das Betriebsgas können somit entlang im Wesentlichen der gesamten Fläche der Membran 5 durch das Stützelement 7a zur Membran 5 hin dringen.

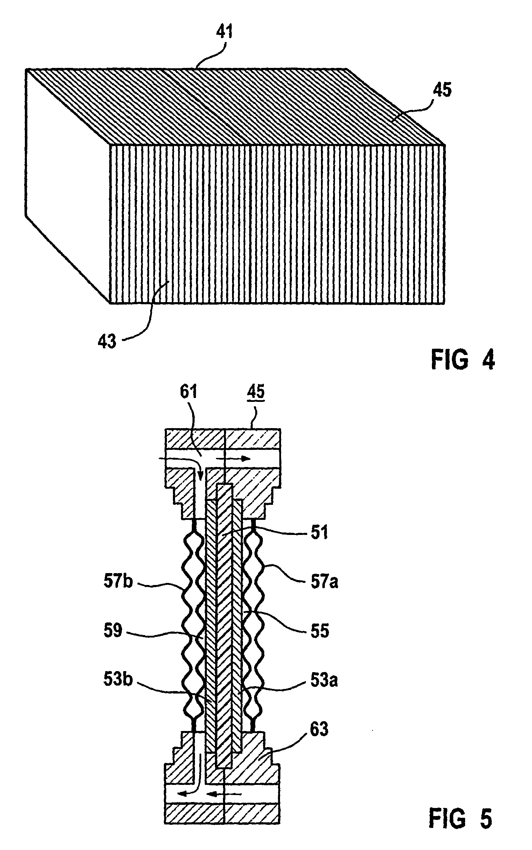

In Figur 4 ist in schematischer Darstellung eine Brennstoffzelleneinrichtung 41 in Form eines Brennstoffzellenblocks gezeigt. Die Brennstoffzelleneinrichtung 41 umfasst einen Stapel aus Befeuchtungszellen 43 und einen Stapel aus Brennstoffzellen 45. Die Befeuchtungszellen 43 weisen die gleiche Breite und Höhe auf, wie die Brennstoffzellen 45. Hierdurch hat der Brennstoffzellenblock entlang der Stapelrichtung der Befeuchtungszellen 43 und der Brennstoffzellen 45 entlang einer Stapelachse eine gleichmäßige Breite und Höhe. Außerdem haben die Befeuchtungszellen 43 die gleiche Dicke wie die Brennstoffzellen 45, so dass die äußere Form und die äußeren Abmessungen der Befeuchtungszellen 43 gleich sind wie die äußere Form und die äußeren Abmessungen der Brennstoffzellen 45.

Ein Schnitt durch eine Brennstoffzelle 45 der Brennstoffzelleneinrichtung 41 ist in Figur 5 gezeigt. Die Brennstoffzelle 45 umfasst einen Elektrolyten 51 sowie zwei Elektroden 53a und 53b, die jeweils an der flachen Seite des Elektrolyten 51 angeordnet sind. An die Elektrode 53a grenzt ein Brenngasraum 55, der zwischen der Elektrode 53a und einer Verbundleiterplatte 57 der Brennstoffzelle 45 angeordnet ist. An die Elektrode 53b grenzt ein Oxidationsgasraum 59, der zwischen der Elektrode 53b und einer weiteren Verbundleiterplatte 57b der Brennstoffzelle 45 angeordnet ist. Die Verbundleiterplatten 57a und 57b sind Kühlelemente, die aus zwei Blechen bestehen, die zwischen sich einen Kühlwasserraum einschließen.

Während des Betriebs der Brennstoffzelle 45 strömt Kühlwasser durch die Verbundleiterplatten 57a, 57b zum Kühlen der Brennstoffzelle 45. Durch einen Axialkanal 61 der Brennstoffzelle 45 strömt Oxidationsgas und gelangt durch einen Radialkanal in den Oxidationsgasraum 59.

Sowohl die Membran-Anordnung der Befeuchtungszelle 1 als auch die Elektrolyt-Anordnung der Brennstoffzelle 45 ist in einen Rahmen aus einem Dichtmaterial 3 bzw. 63 eingefasst. Das Dichtmaterial 3 der Befeuchtungszelle 1 ist das gleiche Material wie das Dichtmaterial 63 der Brennstoffzelle 45. Auch die Stützelemente 7a, 7b sind aus dem gleichen Trägermaterial gefertigt wie die Elektroden 53a, 53b, nämlich aus Kohlepapier. Das Kohlepapier der Elektroden 53a und 53b ist jedoch im Gegensatz zu den Stützelementen 7a und 7b noch mit einem weiteren Material zur Hydrophobierung beschichtet. Außerdem weisen die Elektroden 53a, 53b auf ihrer dem Elektrolyten 51 zugewandten Seite eine Beschichtung aus Platin auf, die als Katalysator für die elektrochemische Reaktion innerhalb der Brennstoffzelle 45 dient. Der Elektrolyt 51 ist wie die wasserdurchlässige Membran 5 aus NAFION gefertigt. Außerdem weist die Membran-Anordnung der Befeuchtungszelle 1 die gleichen Abmessungen auf, wie die Elektrolyt-Anordnung der Brennstoffzelle 45. Durch den analogen Aufbau der Brennstoffzelle 45 und der Befeuchtungszelle 1 ist die Zahl der in der Brennstoffzelleneinrichtung 41 verwendeten Materialien sowie die Zahl der für die Herstellung der Brennstoffzelleneinrichtung 51 benötigten Werkzeuge überschaubar. Dies reduziert die Herstellungskosten der Befeuchtungszelle 1 sowie der Brennstoffzelleneinrichtung 41.

## Patentansprüche

1. Brennstoffzelleneinrichtung (41) mit
- einer Anzahl von Brennstoffzellen (45), die jeweils eine zwischen zwei Verbundleiterplatten angeordnete Elektrolyt-Anordnung aus einem Elektrolyten (51) und beidseitig des Elektrolyten (51) angeordneten Elektroden (53a, 53b) aufweisen, und
- einer Anzahl von Befeuchtungszellen (1) mit zwei Außenplatten (9), zwischen denen ein Gasraum (21), ein Befeuchtungswasserraum (31) und eine die beiden Räume (21, 31) trennende wasserdurchlässige Membran (5) angeordnet ist, wobei
- die Befeuchtungszellen (1) eine Membran-Anordnung aus einer Membran (5) und beidseitig der Membran angeordneten Stützelementen (7a, 7b) aufweisen und die Membran-Anordnung und die Elektrolyt-Anordnung in Aufbau und Abmessungen gleich sind,
- die Membran (5) aus dem gleichen Material hergestellt ist wie der Elektrolyt (51),
- die Struktur der Elektroden (53a, 53b) durch ein Trägermaterial bestimmt wird, wobei das Stützelement (7a, 7b) aus dem gleichen Trägermaterial gefertigt ist,
- die Außenplatten (9) aus dem gleichen Material und in der gleichen Form gehalten sind wie die Verbundleiterplatten, und
- die äußere Form und die äußeren Abmessungen der Befeuchtungszellen (1) gleich sind wie diejenigen der Brennstoffzellen (45).

2. Brennstoffzelleneinrichtung (41) nach Anspruch 1,
**dadurch gekennzeichnet, dass** das Stützelement (7a, 7b) aus einem Fasergeflecht oder einem Faserfilz gefertigt ist.

3. Brennstoffzelleneinrichtung (41) nach einem der vorhergehenden Ansprüche,
**dadurch gekennzeichnet, dass** das Stützelement (7a, 7b) aus Kohlepapier besteht.

4. Brennstoffzelleneinrichtung (41) nach einem der vorhergehenden Ansprüche,
**dadurch gekennzeichnet, dass** das Stützelement (7a, 7b) hydrophil ist.

5. Brennstoffzelleneinrichtung (41) nach einem der vorhergehenden Ansprüche,
**dadurch gekennzeichnet, dass** das Stützelement (7a, 7b) mindestens die Hälfte einer flachen Seite der Membran (5) bedeckt.

6. Brennstoffzelleneinrichtung (41) nach einem der vorhergehenden Ansprüche,
**gekennzeichnet durch** eine das Stützelement (7a, 7b) im Bereich eines Betriebsmitteleinlasses (15, 29) abdeckende Abdeckvorrichtung (13, 33).

7. Brennstoffzelleneinrichtung (41) nach einem der vorhergehenden Ansprüche,
**dadurch gekennzeichnet, dass** die Elektrolyt-Anordnung und die Membran-Anordnung von dem gleichen Dichtmaterial (3, 63) eingefasst sind.

## Claims

1. Fuel cell apparatus (41)
- having a number of fuel cells (45) which each include an electrolyte assembly which is arranged between two interconnector plates and comprises an electrolyte (51) and electrodes (53a, 53b) arranged on both sides of the electrolyte (51), and
- a number of humidification cells (1) having two outer plates (9), between which a gas space (21), a humidification water space (31) and a water-permeable membrane (5) separating the two spaces (21, 31) are arranged, wherein
- the humidification cells (1) include a membrane assembly comprising a membrane (5) and supporting elements (7a, 7b) arranged on both sides of the membrane, with the structure and dimensions of the membrane assembly and the electrolyte assembly being identical,
- the membrane (5) is made from the same material as the electrolyte (51),
- the structure of the electrodes (53a,.53b) is defined by a carrier material, the supporting element (7a, 7b) being made from the same carrier material,
- the outer plates (9) are made from the same material and kept in the same shape as the interconnector plates, and
- the external shape and dimensions of the humidification cells (1) are the same as those of the fuel cells (45).

2. Fuel cell apparatus (41) according to Claim 1, **characterized in that** the supporting element (7a, 7b) is made from a braided fibre fabric or a fibre felt.

3. Fuel cell apparatus (41) according to one of the preceding claims, **characterized in that** the supporting element (7a, 7b) consists of carbon paper.

4. Fuel cell apparatus (41) according to one of the preceding claims, **characterized in that** the supporting element (7a, 7b) is hydrophilic.

5. Fuel cell apparatus (41) according to one of the preceding claims, **characterized in that** the supporting element (7a, 7b) covers at least half of a flat side of the membrane (5).

6. Fuel cell apparatus (41) according to one of the preceding claims, **characterized by** a covering device (13, 33) which covers the supporting element (7a, 7b) in the region of an operating-medium inlet (15, 29).

7. Fuel cell apparatus (41) according to one of the preceding claims, **characterized in that** the electrolyte assembly and the membrane assembly are enclosed by the same sealing material (3, 63).

## Revendications

1. Dispositif (41 ) de piles à combustible comprenant
- un certain nombre de piles (45) à combustible qui ont, disposé entre deux plaques conductrices de liaison, respectivement, un agencement d'électrolyte constitué d'un électrolyte (51) et d'électrodes (53a, 53b) disposées de part et d'autre de l'électrolyte (51) ; et
- un certain nombre de cellules (1) d'humidification ayant deux plaques (9) extérieures entre lesquelles sont disposés un espace (21) pour du gaz, un espace (31) pour de l'eau d'humidification et une membrane (5) perméable à l'eau et séparant les deux espaces (21, 31), dans lequel
- les cellules (1) d'humidification ont un agencement de membrane constitué d'une membrane (5) et d'éléments (7a, 7b) d'appui disposés de part et d'autre de la membrane et l'agencement de membrane et l'agencement d'électrolytes ont la même structure et les mêmes dimensions ;
- la membrane (5) est en le même matériau que l'électrolyte (51 ) ;
- la structure des électrodes (53a, 53b) est déterminée par un matériau support, l'élément (7a, 7b) d'appui étant en le même matériau support ;
- les plaques (9) extérieures sont en le même matériau et sont maintenues en la même forme que les plaques conductrices de liaison ; et
- la forme extérieure et les dimensions extérieures des cellules (1) d'humidification sont les mêmes que celles des piles (45) à combustible.

2. Dispositif (41) de piles à combustible suivant la revendication 1, **caractérisé en ce que** l'élément (7a, 7b) d'appui est en un réseau de fibres ou en un feutre de fibres.

3. Dispositif (41 ) de piles à combustible suivant l'une des revendications précédentes, **caractérisé en ce que** l'élément (7a, 7b) d'appui est en papier carbone.

4. Dispositif (41) de piles à combustible suivant l'une des revendications précédentes, **caractérisé en ce que** l'élément (7a, 7b) d'appui est hydrophile.

5. Dispositif (41) de piles à combustible suivant l'une des revendications précédentes, **caractérisé en ce que** l'élément (7a, 7b) d'appui recouvre au moins la moitié d'un côté plat de la membrane (5).

6. Dispositif (41) de piles à combustible suivant l'une des revendications précédentes, **caractérisé par** un dispositif (13, 33) de recouvrement recouvrant l'élément (7a, 7b) d'appui dans la zone d'une entrée (15, 29) d'un fluide de fonctionnement.

7. Dispositif (41) de piles à combustible suivant l'une des revendications précédentes, **caractérisé en ce que** l'agencement d'électrolyte et l'agencement de membrane sont enchâssés par le même matériau (3, 63) d'étanchéité.
